# EUROPEAN PATENT APPLICATION

(11) **EP 4 484 867 A1**
(43) Date of publication of application: **01.01.2025**
(21) Application number: 23900847.7
(22) Date of filing: 20.09.2023
(51) Int. Cl.: F25D 23/12, F25D 23/02, B01D 35/30, B01D 35/04, B67D 7/76

(54) **WATER PURIFYING APPARATUS AND REFRIGERATOR WITH WATER PURIFYING APPARATUS**

(30) Priority: 08.12.2022 KR 20220170229
(71) Applicant: LG Electronics Inc., Yeongdeungpo-gu Seoul 07336 (KR)
(72) Inventor: KIM, Youngjae, Seoul 08592 (KR); JEONG, Soongy, Seoul 08592 (KR); YOON, Changhwan, Seoul 08592 (KR)
(74) Representative: Vossius & Partner Patentanwälte Rechtsanwälte mbB
(86) International application number: PCT/KR2023/014268
(87) International publication number: WO 2024/122826

(57) **Abstract**

The present disclosure relates to a water purifying apparatus and a refrigerator equipped with a water purifying apparatus, and the water purifying apparatus includes a filter; a head in which a water inlet part and a water outlet part are formed, and to which the filter is detachably coupled by rotation; and a shaft mounted between the water inlet part and the water outlet part, and having a bypass flow path directly connecting the water inlet part and the water outlet part, and a filtering flow path connecting so that water flowing into the water inlet part is discharged to the water outlet part via the filter; in which the shaft includes an inner pipe configured to be open at the lower end to communicate with the filter and having a hollow interior to form a portion of the filtering flow path; and a guide part protruding toward the inner center of the inner pipe and extending along a direction in which the inner pipe extends.

## Description

### [Technical Field]

The present disclosure relates to a water purifying apparatus and a refrigerator equipped with a water purifying apparatus.

### [Background Art]

In general, water purifying apparatus include an apparatus that purifies water to a drinkable state using filters or filter media.

Such a water purifying apparatus may be installed in a refrigerator, and together with a dispenser provided on the door, may allow the user to dispense purified water from the outside.

Republic of Korea Patent No. 10-1780168 discloses a water purifying apparatus and a refrigerator equipped with a water purifying apparatus.

The refrigerator equipped with a water purifying apparatus requires replacement or inspection of the filters that make up the water purifying apparatus as needed. For this purpose, the filter is configured to be removable from the water purifying apparatus. Additionally, it can be configured to have a bypass structure that allows water supply even when the filter is separated.

Republic of Korea Patent Publication No. 10-2015-0135021 discloses a head for a water purification filter having such a bypass structure.

Meanwhile, the conventional head for a water purification filter has a problem in that the flow rate flowing into the filter varies according to the water pressure of the water supplied to the water purifying apparatus, and thus the flow rate discharged from the dispenser may vary.

In addition, external force is applied in the process of removing or installing the filter on the head, and thus there is a problem that the portion of the filter inserted into the head is damaged or deformed due to the action of this external force.

### [Disclosure]

### [Technical Problem]

An object of one embodiment of the present disclosure is to provide a water purifying apparatus that may maintain the flow rate of water flowing into the filter within a certain range regardless of the water pressure of the water supplied to the water purifying apparatus and thus may discharge a uniform flow rate of water from the filter, and a refrigerator equipped with a water purifying apparatus.

An object of one embodiment of the present disclosure is to provide a water purifying device that may prevent some components of the head from being damaged or deformed during the process of removing or installing a filter on the head, and a refrigerator equipped with a water purifying apparatus.

### [Technical Solution]

The present disclosure relates to a water purifying apparatus and a refrigerator equipped with a water purifying apparatus, and the water purifying apparatus includes a filter; a head in which a water inlet part and a water outlet part are formed, and to which the filter is detachably coupled by rotation; and a shaft mounted between the water inlet part and the water outlet part, and having a bypass flow path directly connecting the water inlet part and the water outlet part, and a filtering flow path connecting so that water flowing into the water inlet part is discharged to the water outlet part via the filter; in which the shaft includes an inner pipe configured to be open at a lower end to communicate with the filter and having a hollow interior to form a portion of the filtering flow path; and a guide part protruding toward an inner center of the inner pipe and extending along a direction in which the inner pipe extends.

The guide part may be formed to connect a first portion of the inner pipe and a second portion spaced apart from the first portion.

The first portion may extend from an inner surface of the inner pipe along the direction in which the inner pipe extends, and the second portion may extend from the inner surface of the inner pipe along the direction in which the inner pipe extends, and is located at a position facing the first portion.

The guide part may be formed to protrude from a first portion of the inner pipe to cross a center line of the inner pipe.

A connection part coupled to one end portion of the filter may be formed at a lower end of the inner pipe, and the guide part may extend upward from a lower end of the connection part.

A pair of connection parts may be formed to face each other, and the guide part may be formed to connect a first portion extending along one connection part of the pair of connection parts and a second portion extending along another connection part of the pair of connection parts.

A thickness of a vertical cross section of the guide part may correspond to or be smaller than a thickness of the inner pipe.

The guide part may divide the hollow interior of the inner pipe into a first area and a second area.

The filtering flow path may include a horizontal portion extending from an inlet of the shaft in a horizontal direction, a vertical portion connected to an end portion of the horizontal portion and formed inside the inner pipe, and the first area may be located closer to the inlet of the shaft than the second area.

A flow rate of water in the first area may be greater than a flow rate of water in the second area.

An upper end of the guide part may be located to correspond to an upper end of the inner pipe.

A pipe cutout may be located between the pair of connection parts, and a lower end of the guide part may be located below an upper end of the pipe cutout.

The guide part may include a first rib protruding inward from an inner surface of the inner pipe, and a second rib protruding inward from the inner pipe at a position facing the first rib.

The first rib and the second rib may be formed to have different protruding lengths from the inner pipe.

### [Advantageous Effect]

In an embodiment of the present disclosure, a shaft constituting the head includes a guide part that guides water flowing along the filtering flow path to flow into the filter. The guide part has the advantage of smoothing the flow of water along the filtering flow path and maintaining a uniform flow rate of water flowing into the filter regardless of the water pressure.

In addition, the guide part has the advantage of preventing the shaft from being damaged or deformed when manipulating the filter to install or remove to or from the head.

### [Description of Drawings]

FIG. 1 is a front view illustrating a refrigerator according to an embodiment of the present disclosure.
FIG. 2 is a front view illustrating a state where a door of the refrigerator is open.
FIG. 3 is a diagram schematically illustrating the disposition structure of the water supply flow path of the refrigerator.
FIG. 4 is a perspective view illustrating the structure of a water purifying apparatus according to an embodiment of the present disclosure.
FIG. 5 is an exploded perspective view illustrating a state where the filter and head of the water purifying apparatus are separated.
FIG. 6 is an exploded view illustrating the structure of the filter.
FIG. 7 is an exploded perspective view illustrating the head coupling structure viewed from one side.
FIG. 8 is an exploded perspective view illustrating the head coupling structure viewed from another side.
FIG. 9 is an exploded perspective view illustrating the internal structure of the head viewed from one side with a portion cut away.
FIG. 10 is an exploded perspective view illustrating the internal structure of the head viewed from the other side with a portion cut away.
FIG. 11 is a cross-sectional view illustrating the internal structure of the shaft viewed from one side.
FIG. 12 is a cross-sectional view illustrating the internal structure of the shaft viewed from another side.
FIG. 13 is a view illustrating the shaft viewed from below.
FIG. 14 is a perspective view illustrating the head viewed from below.
FIG. 15 is a cross-sectional view illustrating a state where the filter is completely inserted into the head and connected to the filtering flow path.
FIG. 16 is a cross-sectional view illustrating the bypass flow path a state where the filter is separated from the head.
FIG. 17 is a cross-sectional view illustrating the internal structure of a shaft according to another embodiment of the present disclosure viewed from one side.
FIG. 18 is a diagram illustrating a shaft according to another embodiment of the present disclosure viewed from below.

### [Best Mode]

Hereinafter, specific embodiments of the present disclosure will be described in detail along with the drawings. However, the present disclosure cannot be said to be limited to the embodiments in which the idea of the present disclosure is presented, and other disclosures that are regressive or other embodiments included within the scope of the present disclosure may be easily suggested by adding, changing, or deleting other components.

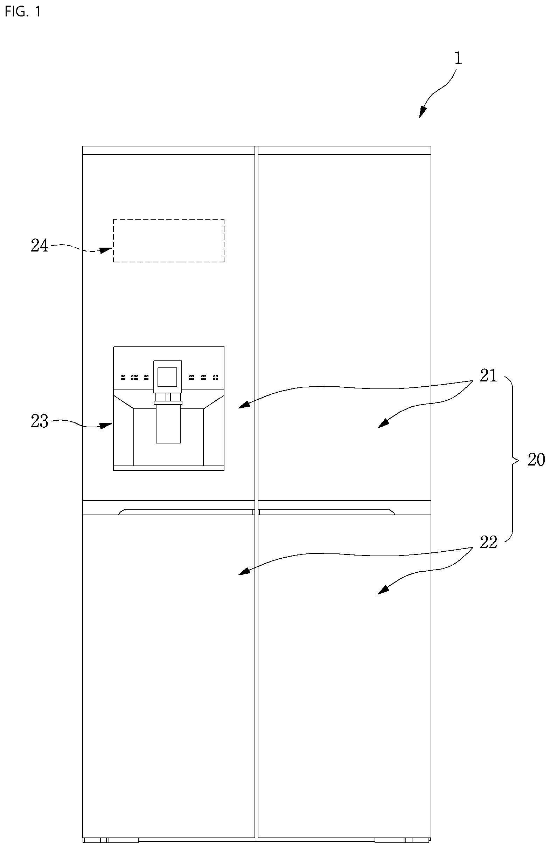

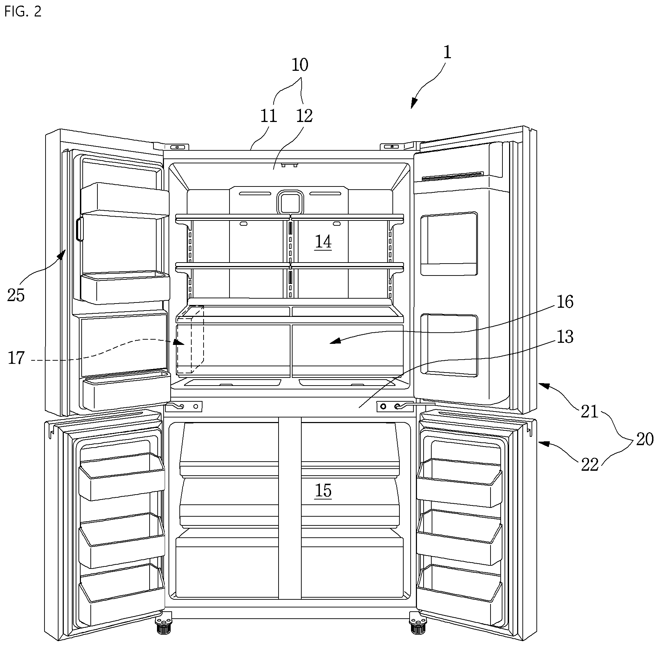

FIG. 1 is a front view illustrating a refrigerator according to an embodiment of the present disclosure, and FIG. 2 is a front view illustrating a state where a door of the refrigerator is open.

The refrigerator 1 equipped with a water purifying apparatus according to an embodiment of the present disclosure may have an external appearance formed by a cabinet 10 that forms a storage space and a door 20 that opens and closes the storage space of the cabinet 10.

The cabinet 10 may include an outer case 11 that forms the outer appearance, and an inner case 12 that is combined with the outer case 11 to form a storage space. An insulating material is filled between the outer case 11 and the inner case 12 to insulate the space in the refrigerator.

The storage space is divided up and down based on the barrier 13, and may be composed of an upper refrigerating chamber 14 and a lower freezing chamber 15.

The door 20 may include a refrigerating chamber door 21 and a freezing chamber door 22 that independently open and close the refrigerating chamber 14 and the freezing chamber 15, respectively. A pair of the refrigerating chamber door 21 and A pair of the freezing chamber door 22 may be configured to rotate independently on both left and right sides by a hinge device 26.

A dispenser 23 and an ice maker 24 may be provided on one of the pair of refrigerator doors 21. The dispenser 23 is provided on the front surface of the refrigerating chamber door 21 and is operated by the user from the outside to dispense water or ice.

An ice-making chamber 25 may be provided above the dispenser 23. The ice-making chamber 25 may be an insulated space where ice is made and stored, accommodates the ice maker 24 therein, and be opened and closed by a separate door.

The interior of the refrigerating chamber 14 may be provided with a number of shelves and drawers 16 for storing food. A water purifying apparatus 17 may be installed on the side of the drawer 16 to purify the supplied water and supply it to the dispenser 23 and the ice maker 24.

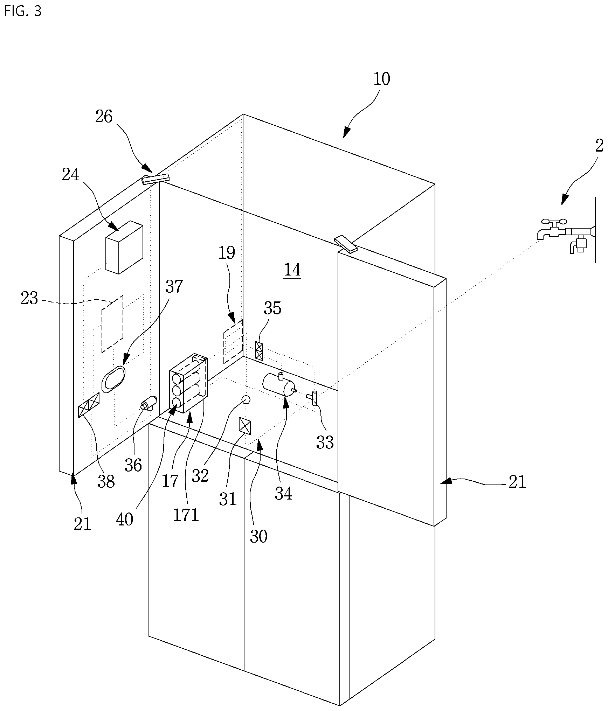

FIG. 3 is a diagram schematically illustrating the disposition structure of the water supply flow path of the refrigerator.

The refrigerator 1 may include a water supply flow path 30 that purifies or cools water supplied from an external water supply source and then dispenses it to the dispenser 23, or supplies the purified water to the dispenser 23 or the ice maker 24.

The water supply flow path 30 is directly connected to the water supply source 2, such as a water supply outside the refrigerator, and introduces into the space inside the refrigerator through the tube guide 19 mounted inside the cabinet 10 and may be connected to the inlet of the water purifying apparatus 17 on the inside of the refrigerator.

The water supply flow path 30 may be provided with a water supply valve 31 and a flow sensor 32, if necessary. The water supply flow path 30 connects the water purifying apparatus 17 and the first branch pipe 33, and the water supply flow path 30 branched from the first branch pipe 33 is connected to the main water tank 34 and the first branch valve 35, respectively. The water supply flow path 30 connected to the outlet of the first branch valve 35 extends along the side wall inside the cabinet 10 or the rear wall outside the cabinet through the tube guide 19 and then extends along the upper surface thereof to be entered through the refrigerator door 21.

The water supply flow path of the refrigerating chamber door 21 may be branched by a second branch pipe 36 and connected to the inlet of the sub-water tank 37 and the second branch valve 38. The outlet of the second branch valve 38 is connected to the dispenser 23 and the ice maker 24 by the water supply flow path 30, respectively, so that purified water may be supplied to the dispenser 23 and the ice maker 24.

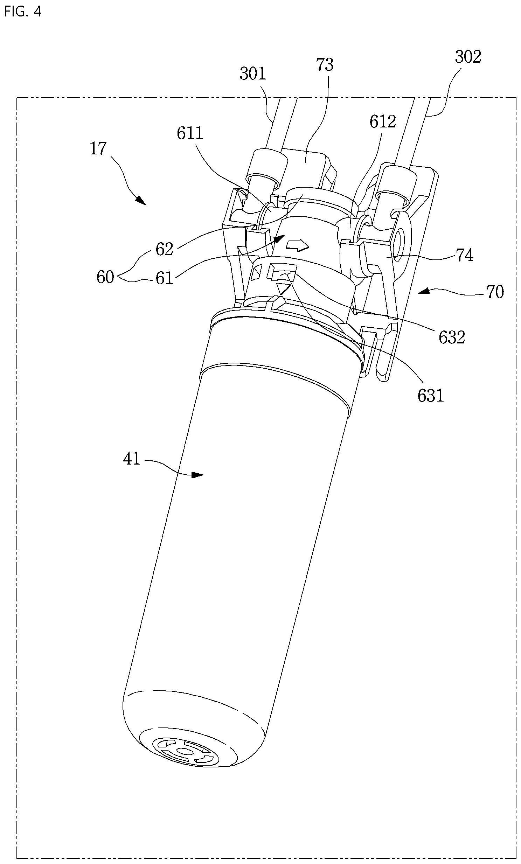

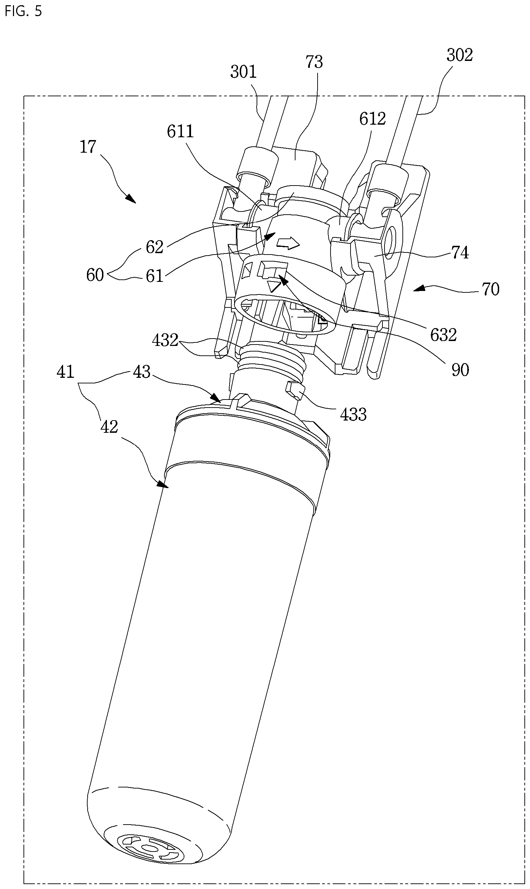

FIG. 4 is a perspective view illustrating the structure of a water purifying apparatus according to an embodiment of the present disclosure, and FIG. 5 is an exploded perspective view illustrating a state where the filter and head of the water purifying apparatus are separated.

The water purifying apparatus 17 includes a filter 40 for purifying supplied water, and a head 60 to which each of the filters 40 is coupled and connected to a flow path through which water flows. The water purifying apparatus 17 may further include a case 171 in which the filter 40 and the head 60 are accommodated.

The water purifying apparatus 17 may include a mounting member 70 on which the head 60 is rotatably mounted. A water inlet pipe 301 through which raw water is received may be connected to one end of the mounting member 70, and a water outlet pipe 302 through which purified water is discharged may be connected to the other end thereof. The head 60 allows raw water received through the water inlet pipe 301 to be purified after passing through each filter and then discharged to the water outlet pipe 302.

The head 60 may include a head body 61 into which the upper end of the filter 40 is inserted and fixed, and a shaft 90 connected to the upper end of the filter 40 inside the head body 61 to form a flow path through which water flows.

The filter 40 may be fixedly mounted on the head 60 in a rotating manner. During the installation process of the filter 40, the shaft 90 may be connected to the filter 40 to form a flow path. When the filter 40 rotates, the shaft 90 rotates together so that the flow path of the shaft 90 may be switched.

In a state where the filter 40 is mounted on the shaft 90, the flow path is switched to the filter 40 side, allowing water to be purified through the filter 40. In a state where the filter 40 is separated, the flow path may be switched so that the supplied water is bypassed and passes through the head 60 without passing through the filter 40.

A case 171 may be formed in a structure that may accommodate at least a portion of the filter 40 and the head 60. The case 171 may have a structure that may be fixedly mounted on one side of the inside of the refrigerating chamber 14.

Meanwhile, the filter 40 may be provided singly or in plural pieces according to the function of the water purifying apparatus 17.

When a plurality of filters 40 are provided, a plurality of heads to which each filter is coupled may be provided. A plurality of heads may be connected to each other by connecting pipes.

The outer shape of the filter 40 may be formed by the housing 41. The housing 41 may include a housing body 42 that accommodates the filtering member 44 therein, and a housing cap 43 coupled to the upper end of the housing body 42.

A portion of the shaft 90 may be introduced through the upper opening of the housing cap 43. The housing cap 43 may be inserted into the opened lower surface of the head 60.

A pair of O-rings 432 are provided on the upper end of the housing cap 43, making them airtight with the inner surface of the head 60 to prevent water leakage.

A coupling protrusion 433 may be further provided on the upper outer peripheral surface of the housing cap 43. The coupling protrusion 433 may move along the coupling groove 631 formed on the inner surface of the head 60 when the upper portion of the filter 40 is inserted into the head 60.

At this time, the coupling protrusion 433 and the coupling groove 631 may be formed in a direction crossing the direction in which the filter 40 is inserted. Accordingly, the filter 40 is rotated while inserted inside the head 60, and may have a structure in which the coupling protrusion 433 and the coupling groove 631 are coupled to each other by rotation of the filter 40.

In a state where the filter 40 and the head 60 are completely coupled to each other, the flow paths of the internal filter 40 and the head 60 are connected so that supplied water may flow into the filter 40.

The mounting member 70 may include a base 73 mounted on the case 171 or a wall on one side of the refrigerator 1, and a rotation support part 74 that protrudes from both sides of the base 73 and rotatably supports both sides of the head 60. The end portions of the water inlet pipe 301 and the water outlet pipe 302 may be disposed on the rotation support unit 74. The water inlet pipe 301 and the water outlet pipe 302 may be connected to the water inlet part 611 and the water outlet part 612 of the head 60, respectively.

The head 60 may further include a head body 61 which has an open lower surface thereof and into which the filter 40 is inserted and fixed, and a shaft 90 accommodated inside the head body 61. Additionally, the head 60 may further include a head cap 62 that shields the open upper surface of the head body 61.

An opening 632 through which the restrained and locked state of the coupling protrusion 433 may be checked may be further formed on the outer surface of the head body 61.

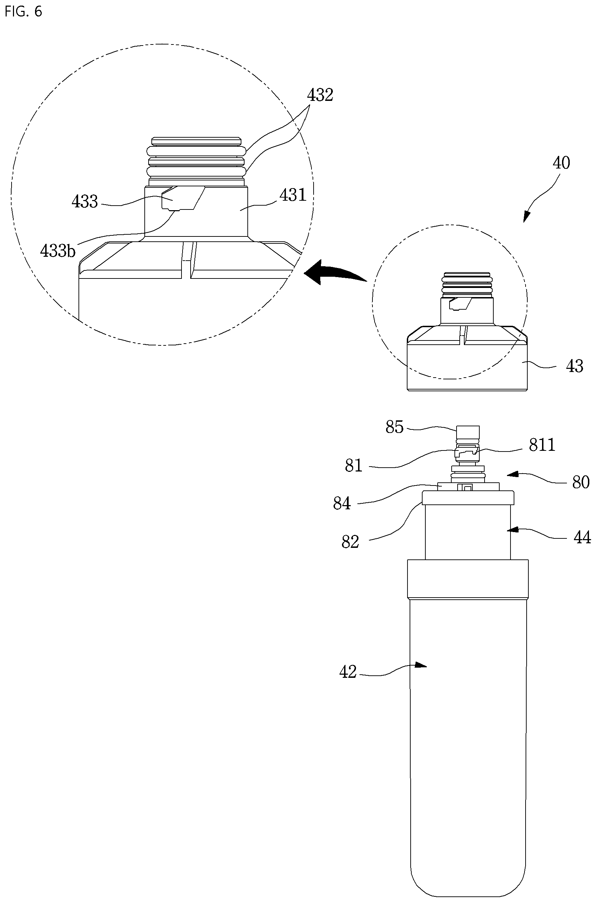

FIG. 6 is an exploded view illustrating the structure of the filter.

The filter 40 may include a filter housing 41 forming an external shape, a filtering member 44 provided inside the filter housing 41, and an upper supporter 80 supporting the filtering member 44..

A filter insertion part 431 is formed at the upper end of the housing cap 43, and a plurality of O-rings 432 may be disposed vertically and continuously in the filter insertion part 431.

A coupling protrusion 433 may be formed on the outside of the filter insertion part 431. A restraining protrusion 433b protruding downward may be further formed on one side of the lower surface of the coupling protrusion 433. The restraining protrusion 433b may be locked and restrained on the inside of the coupling groove 631.

The upper supporter 80 may be accommodated in the accommodation space formed by the housing cap 43. The upper supporter 80 may be coupled to the upper surface of the filtering member 44 and the inner surface of the housing cap 43, respectively.

A supporter fastening part 81 may be formed in the upper supporter 80. In a state where the upper supporter 80 is fully rotated with the upper end of the upper supporter 80 inserted into the filter insertion part 431, the hook part 811 of the supporter fastening part 81 is locked and restrained to the end portion of the housing fastening part so that the upper supporter 80 may be coupled to the housing cap 43.

A filtering member 44 may be accommodated inside the filter housing 41. The filtering member 44 allows incoming water to be purified as it passes through. For example, the filtering member 44 may be a commonly used carbon filter or membrane filter.

A space through which water flows may be formed between the filter housing 41 and the outer surface of the filtering member 44.

The upper supporter 80 is disposed at the upper end of the filtering member 44 and extends upward to form a passage connecting the inlet of the filter insertion part 431 and the hollow 441. Water supplied from the head 60 may flow into the filtering member 44 through the filter insertion part 431, and water purified in the filtering member 44 may flow out to the head 60.

The upper supporter 80 may include a supporter accommodation part 82 that accommodates the upper end of the filtering member 44. The upper supporter 80 may further include a supporter step part 84 that protrudes stepwise upward from the upper surface of the supporter insertion part 83. The upper supporter 80 may further include a supporter extension part 85 extending from the center of the upper surface of the supporter step part 84 toward the inside of the filter insertion part 431.

A filter input flow path 871 and a filter output flow path 861 may be formed inside the supporter extension part 85. Accordingly, water supply into the filter 40 and discharge of water purified from the filter 40 may be accomplished through the supporter extension part 85.

In detail, a first filter input flow path 872 extending downward is formed on the open upper surface of the supporter extension part 85. A second filter input flow path 873 penetrating across the supporter step part 84 may be formed in the supporter step part 84.

Water discharged through the filter input flow path 871 flows along the space between the filter housing 41 and the filtering member 44. Additionally, water flowing into the outside of the filtering member 44 may be purified in the process of passing through the filtering member 44 and flowing into the hollow 441.

A filter outlet 862 may be formed in the supporter extension part 85. Water discharged from the filter outlet 862 may be discharged along the outlet groove 875 and the water discharge guide part 965b formed on the outer surface of the shaft 90.

The upper end of the supporter extension part 85 may be formed in a corresponding shape so that it can be coupled to the shaft 90. In a state where the supporter extension part 85 and the shaft 90 coupled to each other, the shaft 90 and the filter 40 may be rotated together.

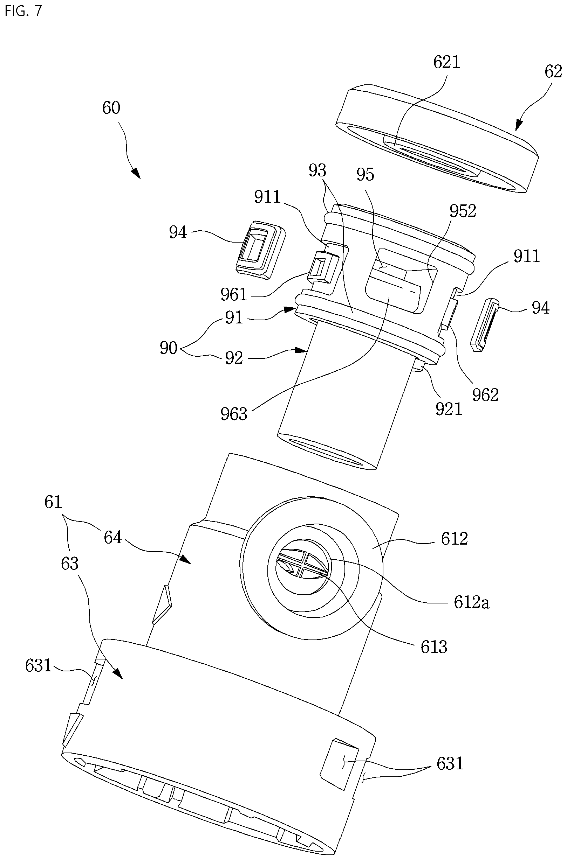

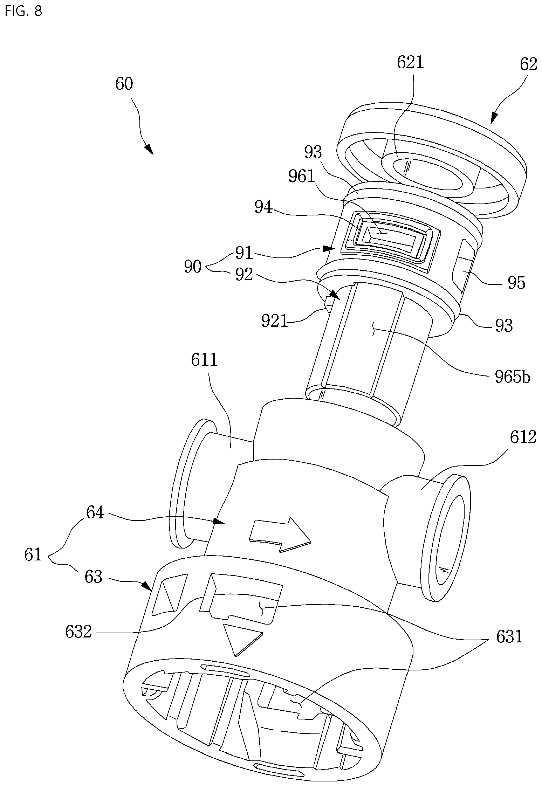

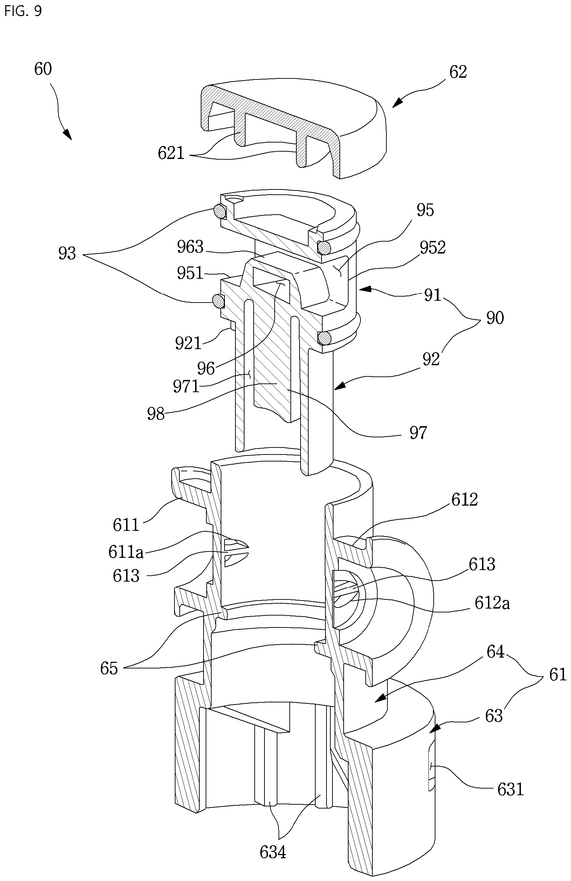

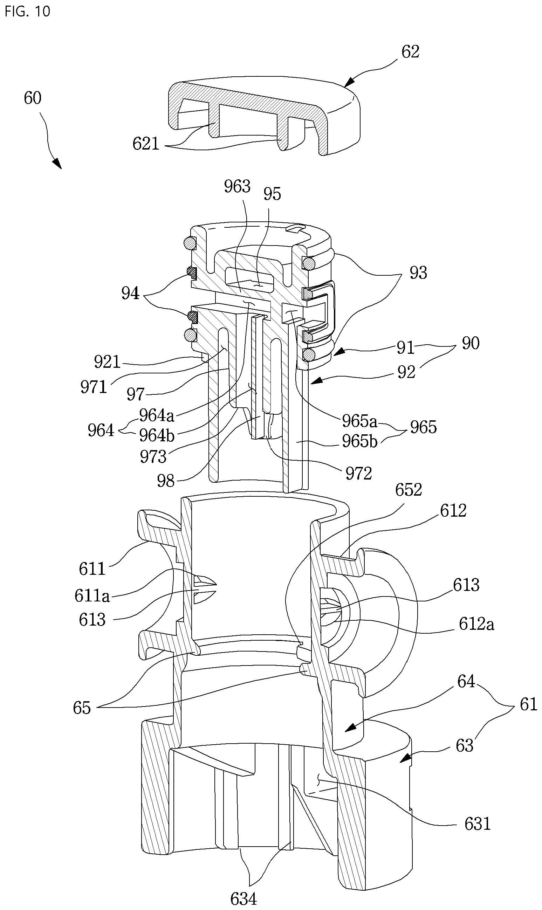

FIG. 7 is an exploded perspective view illustrating the head coupling structure viewed from one side, FIG. 8 is an exploded perspective view illustrating the head coupling structure viewed from another side, FIG. 9 is an exploded perspective view illustrating the internal structure of the head viewed from one side with a portion cut away, and FIG. 10 is an exploded perspective view illustrating the internal structure of the head viewed from the other side with a portion cut away.

The head 60 includes a head body 61 and a shaft 90. The shaft 90 may be inserted through the open upper surface of the head body 61.

The head body 61 may include a lower body 63 and an upper body 64. The lower body 63 has an open lower surface so that the filter 40 may be accommodated. A coupling groove 631 into which the coupling protrusion 433 is inserted may be formed in the lower body 63.

A plurality of supporting ribs 634 may be formed around the inner surface of the lower body 63 to prevent the filter 40 from sagging in a state where the filter insertion part 431 is inserted.

The upper body 64 is formed at the upper end of the lower body 63. The upper body 64 may be formed to have a smaller diameter than the lower body 63.

The shaft 90 is inserted through the open upper surface of the upper body 64 and may be mounted inside the upper body 64. Inside the upper body 64, the upper end of the filter insertion part 431, the upper end of the supporter extension part 85, and the lower end of the shaft 90 may all be disposed. By combining these structures, a flow path through which purified water may flow through the filter 40 may be formed.

The upper body 64 has a water inlet part 611 and a water outlet part 612 protruding outward. The water inlet part 611 and the water outlet part 612 may communicate with the water inlet pipe 301 and the water outlet pipe 302, respectively. The water inlet part 611 and the water outlet part 612 may be selectively communicated with a flow path formed in the shaft 90. The water inlet part 611 and the water outlet part 612 may be disposed in a straight line opposite each other in the head.

The head 60 may further include a head cap 62 that shields the upper surface of the head body 61 into which the shaft 90 is inserted. A cap support part 621 extending to the upper surface of the shaft 90 may be formed on the lower surface of the head cap 62.

The shaft 90 may be rotatably seated on the upper body 64. A filtering flow path 96 and a bypass flow path 95 are formed in the shaft 90. By rotating the shaft 90, these flow paths may be selectively connected to the water inlet part 611 and the water outlet part 612.

The shaft 90 may include an upper part 91 and a lower part 92. Shaft O-rings 93 are provided at the upper end and the lower end of the upper part 91, respectively, to prevent water leakage. A shaft inlet 961 and a shaft outlet 962 are formed around the upper part 91 at positions facing each other, and may be formed at positions corresponding to the water inlet part 611 and the water outlet part 612. Water passing through the water inlet part 611 may flow into the shaft inlet 961, and water passing through the shaft outlet 962 may be discharged through the water outlet part 612.

A sealing member mounting part 911 on which the sealing member 94 is mounted may be formed around the shaft inlet 961 and the shaft outlet 962. A sealing rib 613 may be formed at the water inlet part 611a and the water outlet part 612a formed in the water inlet 611 and the water outlet 612. During the rotation of the shaft 90, the sealing rib 613 presses the sealing member 94, thereby preventing the sealing member 94 from being separated.

A bypass inlet 951 and a bypass outlet 952 may be formed between the shaft inlet 961 and the shaft outlet 962 on the outer surface of the upper part 91 at positions facing each other. When the bypass inlet 951 and the bypass outlet 952 are aligned with the water inlet part 611 and the water outlet part 612, respectively, by rotation of the shaft 90, the water supplied to the water inlet part 611 may pass through the flow path 95 and be discharged directly to the water outlet part 612.

A lower part 92 may extend downward from the center of the upper part 91. The lower part 92 may be formed to be smaller than the inner diameter of the seating part 65 and may extend downwardly through the seating part 65.

A water outlet guide part 965b may be formed on one side of the lower part 92. With the shaft 90 mounted on the head 60, the water outlet guide part 965b of the shaft 90 is spaced apart from the inner surface of the head 60 to form a shaft water outlet flow path 965, which is a water flow passage.

FIG. 9 illustrates a longitudinal section in a state where the bypass flow path 95 is switched to be connected to the water inlet part 611 and the water outlet part 612.

The bypass inlet 951 and the bypass outlet 952 may communicate with the bypass flow path 95 while being aligned with the water inlet 611a and the water outlet 612a, respectively.

Water flowing into the head 60 passes through the head 60 without passing through the filter 40. Even in a state where the filter 40 is separated, water may be continuously supplied to the water supply flow path 30 without leakage occurring on the side where the filter 40 is mounted.

A flow path protrusion 963 is formed on the inner surface of the bypass flow path 95 to form the filtering flow path 96. The flow path protrusion 963 may be formed to protrude from the bottom of the bypass flow path 95.

FIG. 10 illustrates a longitudinal cross-section in a state where the filtering flow path is switched to be connected to the water inlet part and the water outlet part.

The filtering flow path 96 may be connected to the water inlet part 611 and the water outlet part 612 as the shaft 90 rotates. In this case, water flowing into the head 60 through the water inlet pipe 301 may be supplied to the inside of the filter 40 and purified.

An inner pipe 97 is formed inside the lower part 92, and the inner pipe 97 may be connected to the supporter extension part 85.

The filtering flow path 96 may include a shaft water inlet flow path 964 and a shaft water outlet flow path 965. The shaft water inlet flow path 964 may include a horizontal portion 964a extending from the shaft inlet 961 to the center of the shaft 90, and a vertical portion 964b extending downward from the end portion of the vertical portion 964a. The vertical portion 964b may be formed by the inner pipe 97.

The outer surface of the inner pipe 97 is disposed to be away from the inner surface of the lower part 92 to form a separation space 971. When installing the filter 40, the upper end of the supporter extension part 85 may be inserted into the separation space 971.

The inner pipe 97 and the supporter extension part 85 are connected to the inner surface of the lower part 92, so that the shaft 90 and the upper supporter 80 may rotate together.

By combining the inner pipe 97 and the supporter extension part 85, the shaft water inlet flow path 964 may communicate with the filter input flow path 871, and water for purification may be supplied to the filtering member 44.

The shaft water outlet flow path 965 may include a water outlet guide part 965b formed on the outer surface of the lower part 92 and a water outlet connection part 965a formed on the upper part 91.

The upper end of the water outlet guide part 965b penetrates the lower surface of the upper part 91 and communicates with the water outlet connection part 965a. In addition, the water outlet connection part 965a connects the water outlet guide part 965b and the shaft outlet 962 on the inside of the upper part 91.

Purified water discharged from the filter outlet 862 may move upward along the water outlet guide part 965b, pass through the water outlet connection part 965a, and be discharged to the shaft outlet 962. Purified water discharged through the shaft outlet 962 may be discharged through the water outlet part 612.

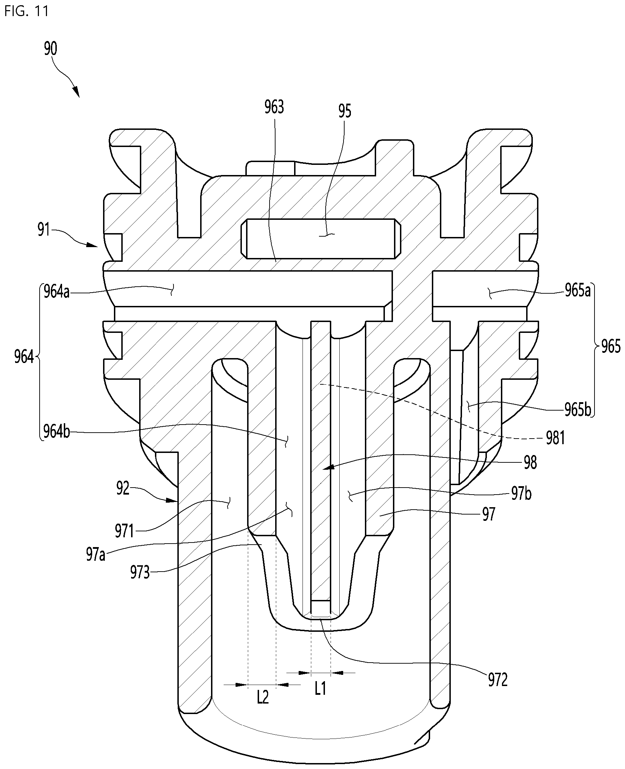

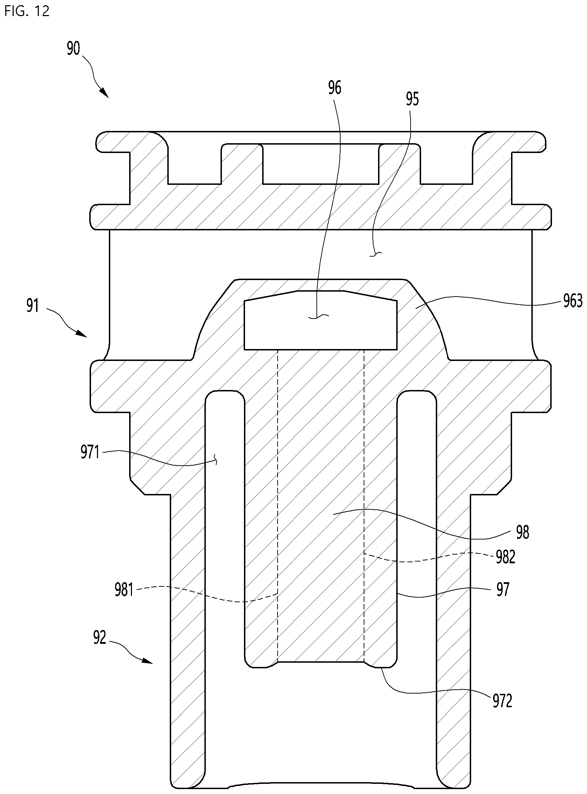

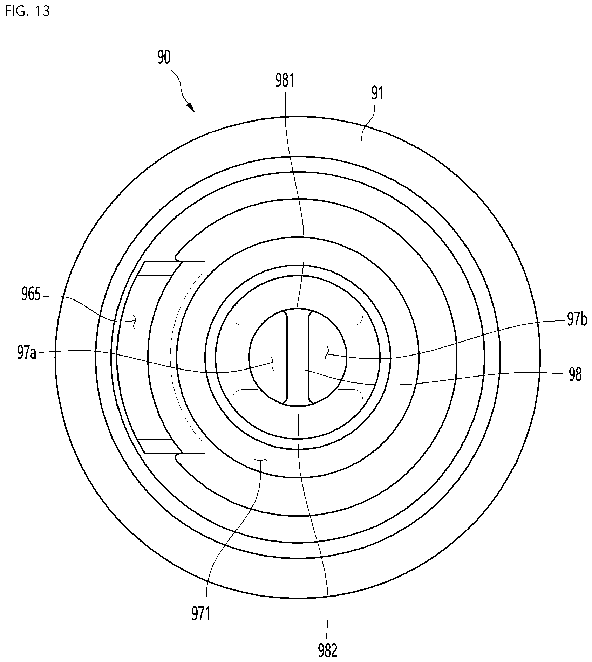

FIG. 11 is a cross-sectional view illustrating the internal structure of the shaft viewed from one side, FIG. 12 is a cross-sectional view illustrating the internal structure of the shaft viewed from another side, and FIG. 13 is a view illustrating the shaft viewed from below.

Looking at the structure of the shaft 90 in more detail, a filtering flow path 96 and a bypass flow path 95 may be formed in the shaft 90. By rotating the shaft 90, the filtering flow path 96 or the bypass flow path 95 may be selectively connected to the water inlet part 611 and the water outlet part 612.

The shaft 90 may include an upper part 91 and a lower part 92. Inside the upper part 91, a bypass flow path 95 and a horizontal portion 964a of the filtering flow path 96 may be formed.

By rotating the shaft 90, the shaft inlet 961 and shaft outlet 962 may be aligned with the water inlet part 611 and the water outlet part 612, respectively. The water supplied to the water inlet part 611 may pass through the filtering flow path 96 and the filter 40, and then the purified water may be discharged to the water outlet part 612.

By rotating the shaft 90, the bypass inlet 951 and the bypass outlet 952 may be aligned with the water inlet part 611 and the water outlet part 612, respectively. Water supplied to the water inlet part 611 may pass through the bypass flow path 95 and be discharged to the water outlet part 612.

Meanwhile, the lower part 92 may be formed to extend downward from the center of the upper part 91. An inner pipe 97 is formed inside the lower part 92.

The inner pipe 97 may be connected to one end portion of the filter. The inner pipe 97 is connected to the supporter extension part 85, so that water received through the shaft 90 may be supplied into the filter 40.

The inner pipe 97 may have an open lower end and be hollow to form a vertical portion 964b of the filtering flow path 96.

The vertical length of the inner pipe 97 may be shorter than the vertical length of the lower part 92. The lower end of the inner pipe 97 may be positioned spaced upward from the lower end of the lower part 92.

A pair of pipe cutouts 973 may be formed at the lower end of the inner pipe 97. The pipe cutout 973 may be fitted with the protrusion 852 formed on the supporter extension part 85. A pair of pipe cutouts 973 may be formed at positions facing each other.

A pair of connection parts 972 may be formed between a pair of pipe cutouts 973 at the lower end of the inner pipe 97. A pair of connection parts 972 may be formed at positions facing each other. The connection part 972 may be coupled to a connection part formed at the upper end of the supporter extension part 85. The lower end of the connection part 972 may be located lower than the lower end of the pipe cutout 973. The supporter extension part 85 may be coupled to or separated from the inner pipe 97 by rotating the filter 40.

Meanwhile, a guide part 98 is formed on the inner surface of the inner pipe 97, that is, on the filtering flow path. Here, the outer surface of the inner pipe 97 may be defined as the surface facing the lower part 92. The outer surface of the inner pipe 97 may form one surface of the separation space 971. The inner surface of the inner pipe 97 may form one surface of the vertical portion 964b of the filtering flow path 96.

The guide part 98 protrudes toward the inner center of the inner pipe 97 and may extend along the direction in which the inner pipe 97 extends.

The guide part 98 may be formed to protrude from the first portion 981 so as to cross the hollow formed in the inner pipe 97. The guide part 98 may be formed to extend in a direction intersecting the direction in which the inner pipe 97 extends.

For example, the guide part 98 may be formed to extend from the first portion 981 of the inner pipe 97 toward the inner center of the inner pipe 97.

The guide part 98 may be formed to connect the first portion 981 of the inner pipe 97 and the second portion 982 of the inner pipe 97. In other words, the guide part 98 may extend from the first portion 981 of the inner pipe 97 toward the second portion 982 thereof.

The guide part 98 may be formed by extending in a direction intersecting the direction in which the horizontal portion 964a of the filtering flow path 96 extends with respect to the first portion 981.

The guide part 98 is formed to protrude from the inner surface of the inner pipe 97 and may extend upward from the lower end of the inner pipe 97.

The first portion 981 may be a portion extending from the inner surface of the inner pipe 97 along the direction in which the inner pipe 97 extends. The second portion 982 extends from the inner surface of the inner pipe 97 along the direction in which the inner pipe 97 extends and may be provided to be spaced apart from the first portion 981.

The second portion 982 may be formed at a position facing the first portion 981. The first portion 981 may be located on one connection part 972 of the pair of connection parts 972. The second portion 982 may be located on the other connection part 972 of the pair of connection parts 972.

The guide part 98 may be formed to connect the first portion 981 and the second portion 982 and extending in the vertical direction in which the inner pipe 97 is extended.

The guide part 98 may be formed to extend upward from the lower end of the connection part 972.

The lower end of the guide part 98 may be located lower than the upper end of the pipe cutout 973. In this case, the strength is reinforced to prevent damage to the shaft 90 during the coupling and separation process of the filter 40, and the filter 40 may be rotated more easily.

The guide part 98 may extend from the lower end of the connection part 972 to the upper end of the inner pipe 97. In this case, the guide part 98 may be connected to the horizontal portion 964a of the filtering flow path 96.

The guide part 98 may guide the water flowing inside the inner pipe 97 so that the water may directly flow into the filter 40. Water flowing into the upper end of the inner pipe 97 may be guided directly downward, where the filter 40 is located, along a portion of the inner surface of the inner pipe 97 and the guide part 98.

The guide part 98 connects the first portion 981 and the second portion 982 to divide the interior of the inner pipe 97 into a first area 97a and a second area 97b.

The guide part 98 may be formed across the inside of the inner pipe 97 to divide it into a first area 97a and a second area 97b.

Based on the opened lower end of the inner pipe 97, the guide part 98 may be formed across the opened lower end.

The thickness L1 of the guide part 98 may correspond to the thickness L2 of the inner pipe 97 or may be smaller. If the thickness of the guide part 98 is formed too thick, water flowing into the vertical portion 964b may not flow smoothly. Therefore, it is preferable that the guide part 98 is formed to be less than or equal to the thickness of the inner pipe 97. Here, the thickness of the guide part 98 may be defined as the thickness of the vertical cross section.

The first area 97a may be an area where water flowing along the horizontal portion 964a of the filtering flow path 96 flows along the vertical portion 964b of the filtering flow path 96. The second area 97b may be an area where water flowing along the horizontal portion 964a of the filtering flow path 96 is blocked by the guide part 98, thereby restricting the flow of water.

Based on the shaft inlet 961, the first area 97a may be located closer to the shaft inlet 961 than the second area 97b. Based on the shaft outlet 962, the second area 97b may be located closer to the shaft outlet 962 than the first area 97a.

The first area 97a may be located closer to the shaft water inlet flow path 964 than the second area 97b, and the second area 97b is located closer to the shaft water outlet flow path 965 than the first area 97a.

The water that flows from the horizontal portion 964a of the filtering flow path 96 to the vertical portion 964b of the filtering flow path 96 is prevented from flowing in the second area 97b by the guide part 98, and after flowing in the first area 97a, may flow into the filter 40.

In other words, the inner pipe 97 may restrict the area through which water flows on the vertical portion 964b to the first area 97a by the guide part 98.

The flow rate of water flowing in the first area 97a may be greater than the flow rate of water flowing in the second area 97b.

In order to maximize the difference in flow rate of water flowing in the first area 97a and the second area 97b, it is preferable that the upper end of the guide part 98 is formed at a position corresponding to the upper end of the inner pipe 97. In this case, all of the water flowing through the horizontal portion 964a may enter the first area 97a. Accordingly, the flow rate of water flowing inside the inner pipe 97 may be increased. As the flow rate of water flowing through the inner pipe 97 increases, the flow rate of water flowing into the filter 40 from the first area 97a may increase.

As the water pressure of water flowing into the inner pipe 97 increases, the water pressure of water flowing into the filter 40 may increase. As the water pressure of water flowing into the filter 40 increases, the time it takes to pass through the filter 40 may be shortened. Accordingly, the time it takes for water purified through the filter 40 to be discharged to the water outlet 612 may be minimized.

The water pressure of the water supply source 2 may vary according to where the refrigerator 1 is installed. If the water pressure of the water supply source 2 is low, the water pressure of the water flowing through the filtering flow path 96 may be low. In this case, the water flowing in the vertical portion 964b is guided downward by the guide part 98 and may directly enter the filter 40.

In addition, even if the water pressure of the water flowing into the inner pipe 97 is low, the flow rate of water flowing through the vertical portion 964b of the inner pipe 97 may be increased by the guide part 98. Accordingly, the flow rate of water flowing into the filter 40 increases, and the flow rate of water purified through the filter 40 may be secured at a certain level or more.

Meanwhile, when the water pressure of the water supply source 2 is high, the water pressure of the water flowing through the filtering flow path 96 may be high at a certain range or more. When the water pressure of the water flowing into the inner pipe 97 is equal to or higher than a certain range, the water flowing through the vertical portion 964b of the inner pipe 97 may obtain rotational force by the guide part 98.

The water that has obtained the rotational force may be guided downward while flowing in a spiral shape along at least a portion of the inner pipe 97 and the guide part 98. In this case, as the distance over which water flows in the inner pipe 97 increases, the flow rate of water flowing into the filter 40 may decrease. The flow rate of water flowing into the filter 40 is reduced, thereby securing the minimum time for water to be purified through the filter 40. Accordingly, it is possible to secure the flow rate of water purified through the filter 40 at a certain level or more and simultaneously discharge purified water at a reliable level.

In this way, by providing the guide part 98 in the inner pipe 97, the flow rate of water flowing into the filter 40 may be maintained at a certain range or more regardless of the water pressure of the water supply source 2. In other words, it is possible to minimize the difference in flow rate of water flowing into the filter 40 due to the difference in water pressure between the water supply sources 2. Additionally, by securing the minimum time required to pass through the filter 40, the reliability of purified water may be secured.

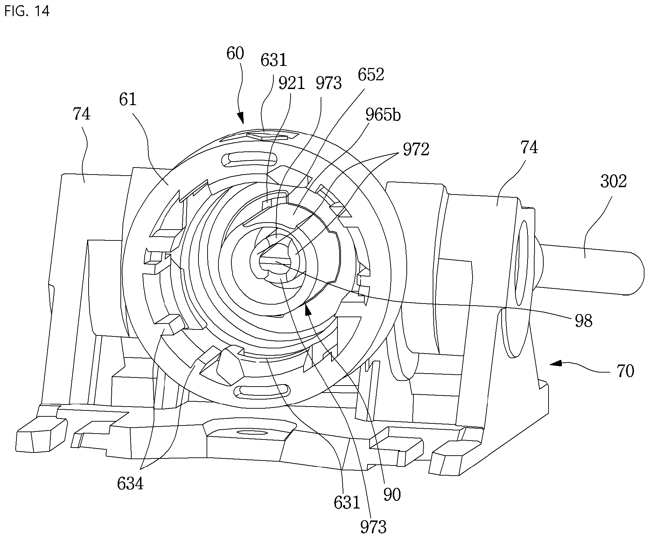

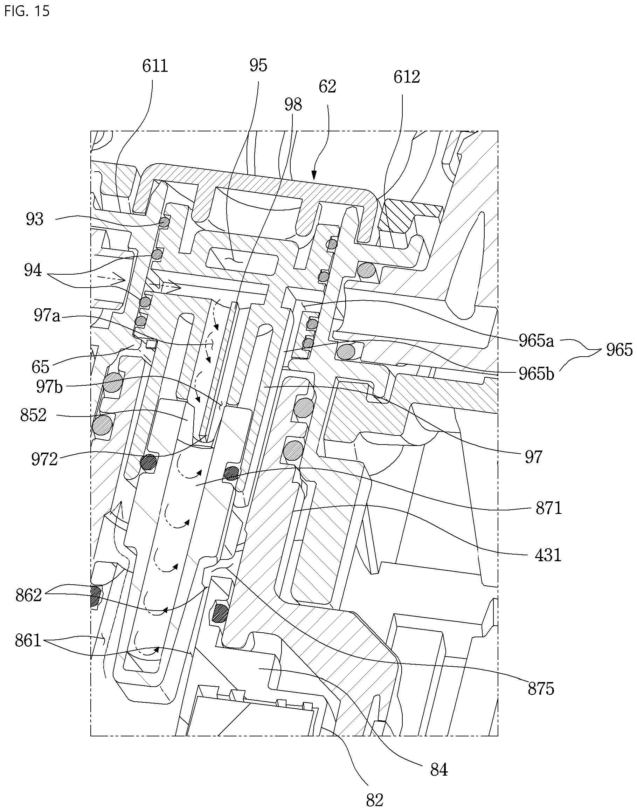

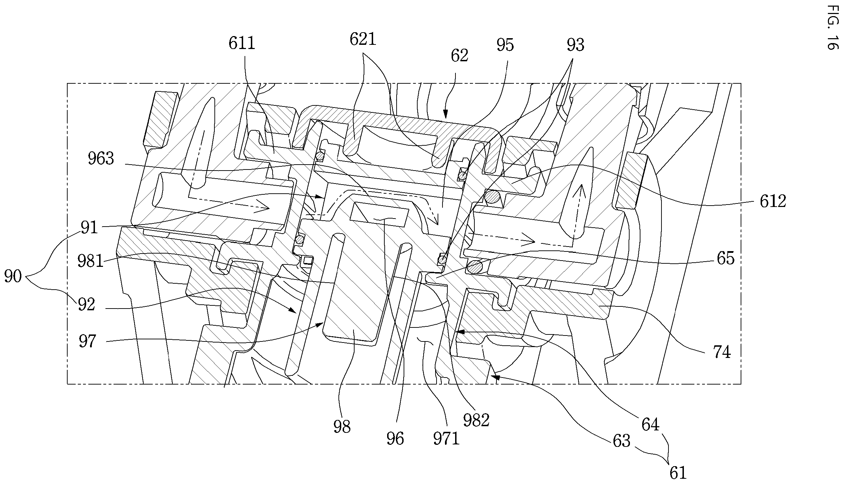

FIG. 14 is a perspective view illustrating the head viewed from below, FIG. 15 is a cross-sectional view illustrating a state where the filter is completely inserted into the head and connected to the filtering flow path, and FIG. 16 is a cross-sectional view illustrating the bypass flow path a state where the filter is separated from the head.

When the filter 40 is further rotated at an angle of 90 degrees so that the coupling protrusion 433 and the coupling groove 631 are completely coupled, the shaft 90 also rotates together to enter the state illustrated in FIG. 15.

When the shaft 90 is fully rotated, the filtering flow path 96 is connected to the water inlet part 611 and the water outlet part 612.

The inner pipe 97 and the supporter extension part 85 remain connected to each other, allowing raw water and purified water to enter and exit between the head 60 and the filter 40.

When the filter 40 is coupled to the head 60, water flowing in through the water inlet part 611 flows along the shaft water inlet flow path 964 through the water inlet port 611a and the shaft inlet 961.

In other words, water flowing along the horizontal portion 964a and the vertical portion 964b passes through the inner pipe 97 and flows into the supporter extension part 85.

Water flowing along the vertical portion 964b may be guided to flow into the first area 97a by the guide part 98. The cross-sectional area through which water flows inside the inner pipe 97 may be reduced by the guide part 98.

If the water pressure of the water flowing into the vertical portion 964b is low, in a state where the water pressure may increase as it flows downward along the inside of the inner pipe 97, the water may flow into the filter 40.

When the water pressure of the water flowing along the vertical portion 964b is high, it may flow in a spiral shape inside the inner pipe 97 by the guide part 98, as illustrated in FIG. 15. In other words, the flow of water may be directly or indirectly obstructed by the guide part 98. In this case, water may flow into the filter 40 at a reduced flow rate.

Next, the water flows into the space between the inner surface of the housing 41 and the filtering member 44. Water flowing from the outside of the filtering member 44 into the hollow 441 inside the filtering member 44 may be purified in the process of passing through the filtering member 44. The purified water inside the filtering member 44 is discharged upward from the filter outlet 862.

The purified water flows upward along the water outlet guide part 965b formed in the lower part 92, flows into the inside of the upper part 91, and sequentially passes through the shaft outlet 962 and the water outlet part 612, and then the water is discharged to the water outlet part 612. In addition, the water outlet pipe 302 of the water outlet part 612 forms a portion of the water supply flow path 30 and may supply purified water to the dispenser 23 and the ice maker 24.

Meanwhile, when the filter 40 needs to be removed, the filter 40 is first rotated in the direction opposite to the coupling direction. As the filter 40 rotates, the coupling protrusion 433 moves in a direction away from the coupling groove 631, and the supporter extension part 85 rotates the shaft 90. When the shaft 90 is rotated by 90 degrees and the bypass flow path 95 is connected, the rotating protrusion 921 is in contact with the stopper 652 to restrict the rotation of the shaft 90.

In this state, if force is applied to further rotate the filter 40, the filter 40 may be separated from the head 60. When the filter 40 is separated from the head 60, the bypass flow path 95 is connected to the water inlet part 611 and the water outlet part 612.

The guide part 98 is formed at a position corresponding to the connection part 972, and may reinforce the strength of the lower end portion of the inner pipe 97. Therefore, the guide part 98 may reinforce the strength of the inner pipe 97 and prevent the inner pipe 97 from being damaged or deformed during the process of separating or combining the filter 40 with the head 60..

The water that has passed through the bypass flow path 95 passes through the head 60 without going through a purification process and is directly supplied to the ice maker 24 or dispenser 23 through the water supply flow path 30.

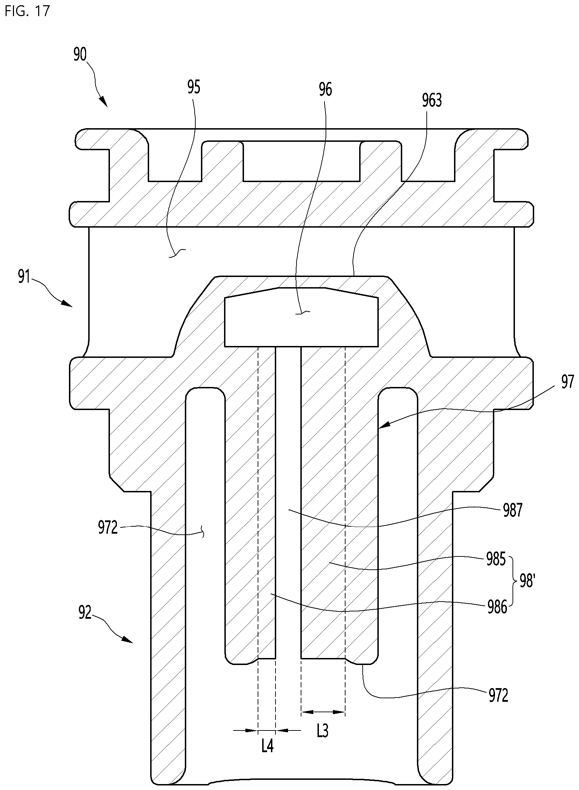

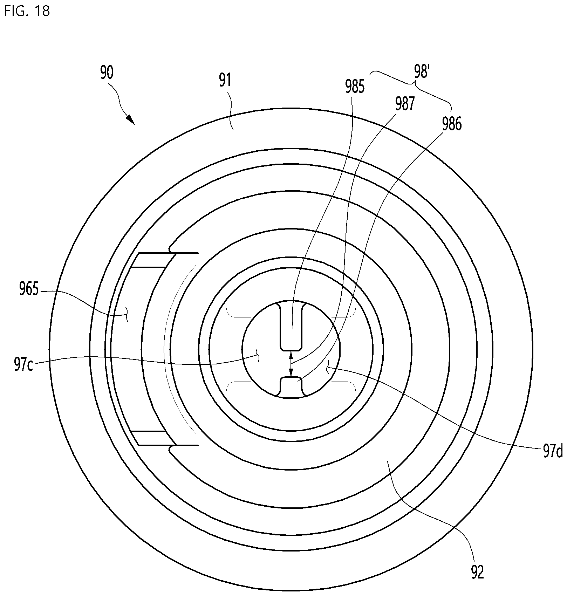

FIG. 17 is a cross-sectional view illustrating the internal structure of a shaft according to another embodiment of the present disclosure viewed from one side, and FIG. 18 is a diagram illustrating a shaft according to another embodiment of the present disclosure viewed from below.

The shaft 90 according to an embodiment of the present disclosure may have a guide part 98' inside the inner pipe 97 that guides the flow path of the vertical portion 964b formed in various shapes.

In the present disclosure, the guide part 98' according to another embodiment may be formed with a plurality of ribs 985 and 986 protruding inward on the inner pipe 97 forming the vertical portion 964b of the filtering flow path 96.

The guide part 98' may include a first rib 985 protruding from the third portion 983 of the inner pipe 97 toward the center of the vertical portion 964b. The first rib 985 may extend from the lower end of the inner pipe 97 along the vertical direction in which the inner pipe 97 extends.

The guide part 98' may include a second rib 986 protruding from the fourth portion 984 of the inner pipe 97 toward the center of the vertical portion 964b. The second rib 986 may extend from the lower end of the inner pipe 97 along the upper portion where the inner pipe 97 extends.

The third part 983 and the fourth part 984 may be parts extending in the vertical direction from a position corresponding to the position where the pair of connection parts 972 are formed. The third part 983 and the fourth part 984 may be positioned facing each other.

At this time, the first rib 985 and the second rib 986 may be formed to protrude from the inner surface of the inner pipe 97 at different lengths. For example, the length L3 of the first rib 985 protruding toward the center of the inner pipe 97 may be longer than the protruding length L4 of the second rib 986. The end portion of the first rib 985 may be positioned to correspond to the center of the inner pipe 97.

The end portion of the second rib 986 may be located spaced apart from the center of the inner pipe 97 at a set distance or more.

The first rib 985 and the second rib 986 may extend in a direction that intersects the direction in which the bypass flow path 95 extends.

To explain this differently, the first rib 985 and the second rib 986 may form a space 987 spaced apart from each other at a set interval. The vertical portion 964b may be divided into a third area 97c and a fourth area 97d by the first rib 985, the second rib 986, and the separation space 987.

The third area 97c may be defined as an area where water flowing into the vertical portion 964b flows. The fourth area 97d may be defined as an area where the flow of water flowing into the vertical portion 964b is restricted. A separation space 987 is formed in the guide part 98', allowing at least a portion of the water flowing into the vertical portion 964b to flow into the third area 97c and the fourth area 97d. With this structure, regardless of the water pressure of the water flowing into the vertical portion 964b, the water pressure of the water flowing into the filter 40 may be maintained within a certain range.

In addition, the strength of the inner pipe 97 is secured by rotating the shaft 90 by the guide part 98', and the elasticity of the lower end of the inner pipe 97 is secured so that the filter may be rotated easier when the filter is removed or installed.

The present disclosure relates to a water purifying apparatus and a refrigerator equipped with a water purifying apparatus, including: a filter; a head in which an inlet part and an outlet part are formed, and the filter is detachably coupled by rotation; and a shaft including a bypass flow path that is mounted between the water inlet part and directly connects the water inlet part and the water outlet part, and a filtering flow path which connects so that water flowing into the water inlet part is discharged to the water outlet part via the filter, in which the shaft includes an inner pipe having a open lower end to communicate with the filter, forming a hollow therein to form a portion of the filtering flow path, and a guide part protruding toward the inner center of the inner pipe and extends along the direction in which the inner pipe extends.

The guide part may be formed to connect a first portion of the inner pipe and a second portion spaced apart from the first portion.

The first portion extends from the inner surface of the inner pipe along the direction in which the inner pipe extends, and the second portion extends along the direction in which the inner pipe extends on the inner surface of the inner pipe, and may be positioned opposite the first portion.

The guide part may be formed to protrude from the first portion of the inner pipe to cross the center line of the inner pipe.

A connection part coupled to one end portion of the filter is formed at the lower end of the inner pipe, and the guide part may extend upward from the lower end of the connection part.

The connection part is formed in pairs to face each other, and the guide part may be formed to connect a first portion extending along one connection part of the pair of connection parts and a second portion extending along the other connection part of the pair of connection parts.

The thickness of the vertical cross section of the guide part may correspond to or be smaller than the thickness of the inner pipe.

The guide part may divide the interior of the inner pipe into a first area and a second area.

The filtering flow path includes a horizontal portion extending in the horizontal direction from the shaft inlet, and a vertical portion connected to an end portion of the horizontal portion and formed inside the inner pipe, and the first area may be located closer to the shaft inlet than the second area.

The flow rate of water in the first area may be greater than the flow rate of water in the second area.

The upper end of the guide part may be positioned to correspond to the upper end of the inner pipe.

A pipe cutout is located between the pair of connection parts, and the lower end of the guide part may be located lower than the upper end of the pipe cutout.

The guide part may include a first rib that protrudes inward from the inner surface of the inner pipe, and a second rib that protrudes inward from the inner pipe at a position facing the first rib.

The first rib and the second rib may have different lengths protruding from the inner pipe.

### [Industrial Applicability]

In an embodiment of the present disclosure, the shaft constituting the head includes a guide part that guides water flowing along the filtering flow path to flow into the filter. The guide part has the advantage of smoothing the flow of water flowing along the filtering flow path and maintaining a uniform flow rate of water flowing into the filter regardless of the water pressure, so its industrial applicability is recognized.

In addition, the guide part is formed inside the shaft, which has the advantage of preventing the shaft from being damaged or deformed when manipulating the filter to install or remove it from the head, so its industrial applicability is recognized.

## Claims

1. A water purifying apparatus comprising:
a filter;
a head in which a water inlet part and a water outlet part are formed, and to which the filter is detachably coupled by rotation; and
a shaft mounted between the water inlet part and the water outlet part, and having a bypass flow path directly connecting the water inlet part and the water outlet part, and a filtering flow path connecting so that water flowing into the water inlet part is discharged to the water outlet part via the filter;
wherein the shaft includes:
an inner pipe configured to be open at a lower end to communicate with the filter and having a hollow interior to form a portion of the filtering flow path; and
a guide part protruding toward an inner center of the inner pipe and extending along a direction in which the inner pipe extends.

2. The water purifying apparatus of claim 1,
wherein the guide part is formed to connect a first portion of the inner pipe and a second portion spaced apart from the first portion.

3. The water purifying apparatus of claim 2,
wherein the first portion extends from an inner surface of the inner pipe along the direction in which the inner pipe extends, and
wherein the second portion extends from the inner surface of the inner pipe along the direction in which the inner pipe extends, and is located at a position facing the first portion.

4. The water purifying apparatus of claim 1,
wherein the guide part is formed to protrude from a first portion of the inner pipe to cross a center line of the inner pipe.

5. The water purifying apparatus of claim 1,
wherein a connection part coupled to one end portion of the filter is formed at a lower end of the inner pipe, and
wherein the guide part extends upward from a lower end of the connection part.

6. The water purifying apparatus of claim 5,
wherein the connection parts are formed in pairs facing each other, and
wherein the guide part is formed to connect a first portion extending along one connection part of the pair of connection parts and a second portion extending along another connection part of the pair of connection parts.

7. The water purifying apparatus of claim 1,
wherein a thickness of a vertical cross section of the guide part corresponds to or is smaller than a thickness of the inner pipe.

8. The water purifying apparatus of claim 2,
wherein the guide part divides the hollow interior of the inner pipe into a first area and a second area.

9. The water purifying apparatus of claim 7,
wherein the filtering flow path includes:
a horizontal portion extending from an inlet of the shaft in a horizontal direction,
a vertical portion connected to an end portion of the horizontal portion and formed inside the inner pipe, and
wherein the first area is located closer to the inlet of the shaft than the second area.

10. The water purifying apparatus of claim 9,
wherein a flow rate of water in the first area is greater than a flow rate of water in the second area.

11. The water purifying apparatus of claim 9,
wherein an upper end of the guide part is located to correspond to an upper end of the inner pipe.

12. The water purifying apparatus of claim 6,
wherein a pipe cutout is located between the pair of connection parts, and
wherein a lower end of the guide part is located below an upper end of the pipe cutout.

13. The water purifying apparatus of claim 1,
wherein the guide part includes:
a first rib protruding inward from an inner surface of the inner pipe, and
a second rib protruding inward from the inner pipe at a position facing the first rib.

14. The water purifying apparatus of claim 13,
wherein the first rib and the second rib are formed to have different protruding lengths from the inner pipe.

15. A refrigerator comprising:
a cabinet having a storage space;
a door configured to open and close the cabinet;
a water purifying apparatus according to any one of claims 1 to 14 provided in the storage space; and
a dispenser provided on the door and configured to dispense water from the water purifying apparatus to outside.
